# EUROPÄISCHE PATENTANMELDUNG

(11) **EP 0 794 692 A2**
(43) Veröffentlichungstag der Anmeldung: **10.09.1997**
(21) Anmeldenummer: 96118496.7
(22) Anmeldetag: 19.11.1996
(51) Int. Cl.: H05B 39/04

(54) **Elektrische Versorgungs-Schaltung für Lampen**

(30) Priorität: 07.03.1996 DE 19608819
(71) Anmelder: Heraeus Med GmbH, D-63450 Hanau (DE)
(72) Erfinder: Steckhan, Markus, 61440 Oberursel (DE)
(74) Vertreter: Kühn, Hans-Christian

(57) **Zusammenfassung**

Eine Lampe für medizinische Anwendungen ist am sekundärseitigen Ausgang eines Transformators einer elektrischen Versorgungsschaltung angeschlossen, wobei die Versorgungsschaltung auf der Primärseite des Transformators ein steuerbares Schaltglied aufweist, welches je nach Spannungslage einer eingangsseitig eingeschweißten Wechselspannung durch ein zwischen zwei Anzapfungen umschaltbares Schaltglied eine Veränderung des Übersetzungsverhältnisses von Primär- zu Sekundär-Wicklung des Transformators ermöglicht, so daß auf verhältnismäßig einfache Weise eine weitgehend verlustfreie Anpassung an verschiedene Wechselspannungsnetze möglich ist.

In einer bevorzugten Ausführungsform ist im Stromkreis der Primär-Wicklung ein zusätzlicher elektronischer steuerbarer Schalter vorgesehen, dessen Schaltstrecke im Stromkreis der Primär-Wicklung liegt, wobei eine Impulsfolge hoher Frequenz im Bereich von 20 bis 40 KHz für eine miniaturisierte Form des Transformators sorgt. Es ist somit möglich, die gesamte Versorgungsschaltung klein zu halten.

## Beschreibung

Die Erfindung betrifft eine elektrische Versorgungs-Schaltung für wenigstens eine Lampe, insbesondere für eine Leuchte für medizinische Anwendungen, die an Wechselspannungsnetzen unterschiedlicher Versorgungsspannungen betrieben werden kann, wobei die Versorgungs-Schaltung wenigstens ein steuerbares Schaltglied aufweist

Aus der EP 0 201 624 A2 ist ein Vorschaltgerät für Leuchtstofflampen bekannt, bei dem eine Brückenschaltung zur Stromversorgung der Lampe in Reihe mit einem sensorgesteuerten Schaltglied und einer Induktivität geschaltet ist, wobei auch bei unterschiedlichen Netzspannungen von beispielsweise 110 Volt oder 220 Volt der Lampe ein definierter Strom zugeführt wird, der unabhängig ist von der Höhe der extern angelegten Spannung ist; um eine Kataphorese der Leuchtstofflampe zu verhindern, ist eine Brückenschaltung aus elektronischen Schaltern vorgesehen, die alternierend von einem logischen Steuerwerk angesteuert werden. Es handelt sich somit um eine verhältnismäßig aufwendige Schaltung.

Aufgabe der Erfindung ist es, eine möglichst einfache Versorgungsschaltung für Lampen, insbesondere für niederspannungsbetriebene Lampen als Temperaturstrahler in medizinischen Leuchten anzugeben, die einen einfachen, robusten Aufbau aufweist und mögliche Fehlanpassungen an das jeweilige Wechselspannungsnetz oder Berührungsgefahren durch galvanische Abtrennung der Lampe vom Wechselspannungsnetz vermeiden soll.

Die Aufgabe wird dadurch gelöst, daß die Lampe an eine Sekundär-Wicklung eines Transformators angeschlossen ist, dessen Primär-Wicklung wenigstens drei Anschlüsse aufweist, von denen ein erster Anschluß an einen ersten Pol eines Stromkreises mit sich zeitlich ändernder Amplitude angeschlossen ist und wenigstens zwei weitere Anschlüsse mit Abgriffen zur Einstellung des Übersetzungsverhältnisses zwischen Primär- und Sekundär-Wicklung mittels Schaltglied versehen sind, wobei das Schaltglied ein Umsteuerelement in Form einer Schaltzunge aufweist, die mit dem zweiten Pol des Stromkreises sich zeitlich ändernder Amplitude verbunden ist und die Position der Schaltzunge von der Versorgungsspannung abhängig ist.

Als besonders vorteilhaft erweist es sich, daß aufgrund der sekundärseitigen Niederspannung keine gefährlichen Berührungen, beispielsweise mit flüssigen Desinfektionsmitteln im medizinischen Bereich mehr möglich sind; darüberhinaus läßt der einfache Aufbau lange Wartungsintervalle und eine kostengünstige Herstellung zu.

In einer ersten bevorzugten Ausführungsform ist das Schaltglied als Relais ausgebildet, dessen Erregerwicklung über Sicherung und Betriebsschalter mit den Polen des Wechselspannungsnetzes verbunden ist. Die an der Erregerwicklung des Relais anliegende Erregerspannung sorgt durch Aufrechterhaltung oder durch Umschaltung des Übersetzungsverhältnisses von Primär- zu Sekundär-Wicklung für eine Anpassung der Sekundärspannung des Transformators an unterschiedliche Netz-Wechselspannungen, d.h. es wird somit eine weitgehend an die Lampen-Nennspannung angepaßte Sekundärspannung erzielt. Im Stromkreis der Primär-Wicklung des Transformators ist dabei ein Einschaltstrombegrenzungsglied vorgesehen, das vorzugsweise als NTC-Widerstand ausgebildet ist.

Es handelt sich hierbei vorteilhafterweise um eine verhältnismäßig robuste Schaltungsanordnung mit hoher Zuverlässigkeit.

In einer weiteren vorteilhaften Ausgestaltung ist das Schaltglied ebenfalls als Relais ausgebildet, dessen Erreger-Wicklung jedoch über einen Gleichrichter sowie über Sicherung und Betriebsschalter mit dem Wechselspannungsnetz verbunden ist; auch hier sorgt die an der Erregerwicklung des Relais anliegende Erregerspannung durch Aufrechterhaltung oder durch Umschaltung des Übersetzungsverhältnisses von Primär- zu Sekundär-Wicklung für eine Anpassung der Sekundärspannung an unterschiedliche Netz-Wechselspannungen; auch hier wird eine weitgehend an die Lampen-Nennspannung angepaßte Sekundärspannung erzielt. Im Stromkreis der Primär-Wicklung ist ein elektronischer Schalter vorgesehen, dessen Schaltstrecke in Reihe zum Schaltglied geschaltet ist, wobei der Stromkreis der Primär-Wicklung über Ausgänge eines weiteren Gleichrichters gespeist wird. Die Primär-Wicklung des Transformators wird mit einem Strom einer Impulsfolge im Bereich von 20 bis 40 kH gespeist, so daß vorteilhafterweise der Übertragungstransformator sehr klein zu bauen ist.

Weiterhin erweist es sich als vorteilhaft, daß aufgrund der Regelungsmöglichkeit eine rasche Anpassung an die Versorgungsspannung zu erzielen ist, wobei jedoch die vom Relais benötigte Umschaltzeit durch eine Zeitverzögerung im Bereich von 50 ms berücksichtigt wird. Eine solche Schaltungsanordnung ist insbesondere für miniaturisierte elektrische Versorgungsschaltungen geeignet.

Weitere vorteilhafte Ausgestaltungen der Erfindung sind in den Ansprüchen 4 bis 11 angegeben. Dabei erweist sich der verhältnismäßig einfache und störunanfällige Schaltungsaufbau als besonders vorteilhaft.

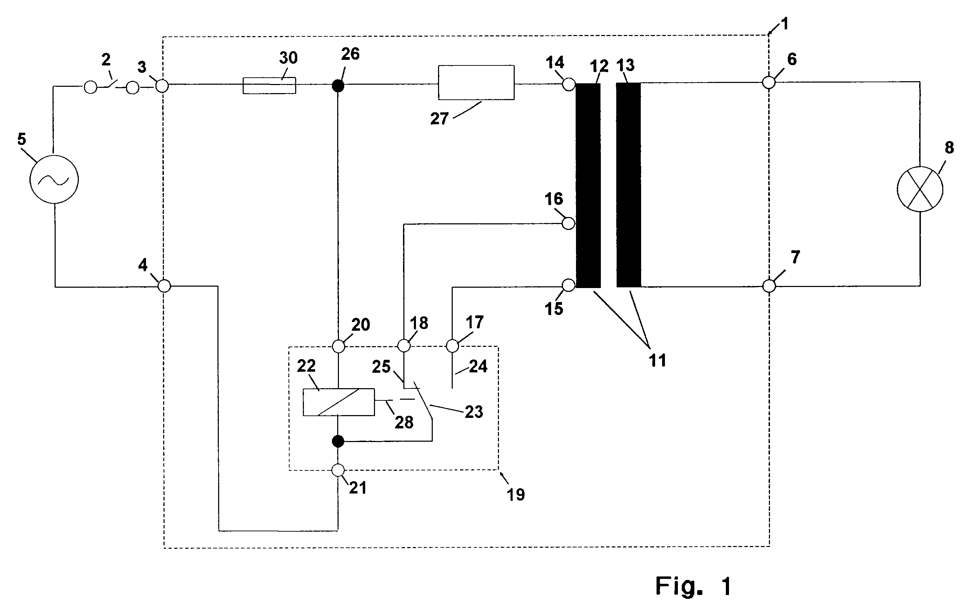

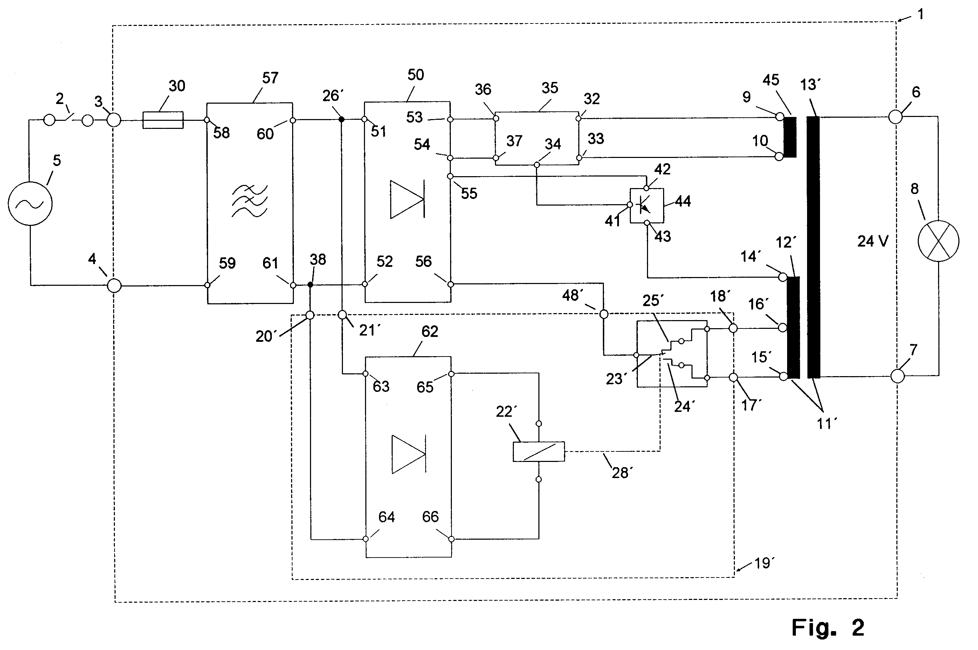

Nachfolgend ist der Gegenstand der Erfindung anhand der Figuren 1 und 2 näher erläutert.
Figur 1 zeigt eine automatische elektromechanische Umschaltung für einen am Netz betriebenen Transformator;
Figur 2 zeigt eine automatische elektromechanische Umschaltung für ein an einem elektronischen Netzteil angeschlossenen Transformator.

Gemäß Figur 1 ist Stromversorgungs-Schaltung 1 über den Betriebsschalter 2 und ihre Eingangsanschlüsse 3,4 mit einem Wechselspannungs-Versorgungsnetz 5 verbunden. Die Ausgangsanschlüsse 6, 7 der Stromversorgungs-Schaltung 1 sind zum Betrieb der angeschlossenen Lampe 8 vorgesehen; es ist auch möglich, mehrere Lampen an die Ausgangsanschlüsse 6, 7 anzuschließen.

Die Stromversorgungs-Schaltung 1 enthält einen Transformator 11, dessen Primär-Wicklung 12 an ihren Wicklungsenden Anschlüsse 14, 15 sowie einen dazwischen liegenden Wicklungsabgriff 16 aufweist; die mit den Ausgangsanschlüssen 6, 7 verbundene Sekundär-Wicklung ist mit Ziffer 13 bezeichnet. Endabgriff 15 und Zwischenabgriff 16 der Primär-Wicklung 12 sind mit Anschlußkontakten 17, 18 eines als Relais ausgebildeten Schaltgliedes 19 verbunden, von dem ein Eingangsanschluß 20 mit einem Verzweigungspunkt 26 verbunden ist, der einerseits über eine Einschaltstrombegrenzung 27 mit Endabgriff 14 der Primär-Wicklung 12 verbunden und andererseits über Sicherung 30 mit Eingangsklemme 3 der Stromversorgungs-Schaltung verbunden ist. Der zweite Anschluß 21 des Schaltgliedes ist direkt mit Eingangsanschluß 4 für die Stromversorgung verbunden.

Schaltglied 19 weist ein mit seinen Anschlüssen 20, 21 elektrisch verbundenes Solenoid 22 auf, das über Anker 28 auf Zunge 23 so einwirkt, daß diese bei Unterschreiten einer am Solenoid anliegenden Spannung den Eingang 21 mit Relaiskontakt 25 und Schaltgliedausgang 18 verbindet, so daß der Zwischenabgriff 16 der Primär-Wicklung 12 mit Eingangsanschluß 4 verbunden wird; bei Überschreiten einer an den Eingangsanschlüssen 20, 21 anliegenden Spannung reicht die von Solenoid 22 ausgehende magnetische Kraft auf Anker 28 aus, die Schaltzunge 23 mit Relaiskontakt 24 zu verbinden, so daß die Primär-Wicklung 12 mit ihrem Endanschluß 15 mit Eingangsanschluß 4 verbunden ist. Die am Solenoid 22 anliegende Spannung hat somit einen durch Solenoid 22 fließenden Erregerstrom zu Folge, dessen magnetische Kraft auf anker 28 des Relais direkt von der Spannung abhängig ist und somit einen Schaltungszustand in Schaltglied 19 realisiert, der direkt von der anliegenden Spannung abhängig ist.

Nachfolgend wird die Betriebsweise der in Figur 1 dargestellten Schaltungsanordnung erläutert.

Nach Inbetriebnahme der Stromversorgungs-Schaltung 1 mittels Schließen des Schalters 2 fließt ein Strom über Anschluß 20, 21 des Schaltgliedes 19, was zu einer magnetischen Erregung des Solenoiden 22 führt. Beträgt die von dem Wechselspannungs-Versorgungsnetz 5 ausgehende Spannung beispielsweise 115 Volt, so reicht der durch Solenoid fließende Strom nicht aus, Schaltzunge 23 in Relaisposition 24 umzuschalten, sondern es wird die Ruheposition der Relais-Verbindung zwischen Anschluß 21, Schaltzunge 23, Relais-Kontakt 25 und Anschluß 18 beibehalten; als Folge wird die Primär-Wicklung 12 über Wicklungs-Zwischenabgriff 16 und Endabgriff 14 von einem Primärstrom durchflossen, welcher beispielsweise bei einem Übersetzungsverhältnis von 4,8:1 zwischen Primär- und Sekundär-Wicklung für eine Sekundärspannung von 24 Volt an den mit der Sekundär-Wicklung 13 verbundenen Klemmen 6 und 7 zur Speisung von Lampe 8 sorgt.

Um beim Einschaltvorgang einen übermäßig großen Einschaltstrom zu verhindern, ist ein Einschaltstrom-Begrenzungsglied 27 als NTC-Widerstand vorgesehen, wobei im Einschaltmoment der NTC-Widerstand einen großen Wert besitzt, der aber durch Eigenerwärmung sehr rasch verringert wird und dann keinerlei Bedeutung für die sich anschließende Funktion des Dauerbetriebes der Stromversorgungsschaltung hat.

Wird dagegen Stromversorgungs-Schaltung 1 über seine Eingangsanschlüsse 3, 4 mit einem Wechselspannungsnetz 5 verbunden, dessen Spannung z. B. 230 Volt beträgt, so reicht der dem Solenoiden 22 durch die erhöhte Spannung aufgeprägte Strom aus, eine so hohe magnetische Kraft auf Anker 28 auszuüben, daß Schaltzunge 23 mittels Anker 28 aus der Ruheposition entfernt und mit Relais-Kontakt 24 verbunden wird; als Folge wird dann die Primär-Wicklung 12 über ihren Endabgriff 15, Anschlußkontakt 17 des Schaltgliedes, Relaiskontakt 24, Schaltzunge 23, Anschlußkontakt 21 und Eingangsanschluß 4 mit Wechselspannungsnetz 5 verbunden, dessen anderer Anschluß über Schalter 2, Eingang 3, Einschaltstrom-Begrenzung 27 mit Endabgriff 14 der Primär-Wicklung 12 verbunden ist; aufgrund eines Übersetzungsverhältnisses von Primär- zu Sekundär-Wicklung von ca. 9,6:1 wird an den mit Sekundär-Wicklung 13 verbundenen Ausgangsklemmen 6, 7 wiederum eine Spannung von 24 Volt zur Versorgung von Lampe 8 erzielt. Auch hier wird die Einschaltstrom-Begrenzung mittels des Einschaltstrom-Begrenzungsgliedes 27 wirksam, das als NTC-Widerstand ausgebildet ist.

In der Schaltungsanordnung der nachfolgend erläuterten Figur 2 ist ein steuerbarer Schalter eingesetzt, wie er beispielsweise aus dem Buch "Schaltnetzteile in der Praxis" von Otmar Kilgenstein, Vogel Fachbuch: Elektronik, Würzburg 1992, Seiten 235 bis 270 bekannt ist; in Figur 2 sind der Figur 1 entsprechende Bauelemente mit der gleichen Bezugsziffer bezeichnet bzw. bei Abweichung in Aufbau oder Funktionsweise mit der Bezugsziffer gemäß Figur 1 versehen und durch Apostroph gekennzeichnet; von Figur 1 abweichende Bauelemente sind mit neuen Bezugsziffern versehen.

Gemäß Figur 2 enthält der Stromkreis der Primärwicklung 12' des Transformators 11' neben Schaltglied 19' einen mit seinen Anschlußkontakten 42, 43 in Reihe zur Primär-Wicklung 12' geschalteten, steuerbaren elektronischen Schalter 44, welcher mit Ausgang 55 eines Gleichrichters 50 verbunden ist, der über seine Eingänge 51, 52 vom Wechselspannungsnetz 5 über Netzfilter 57 gespeist wird. Schaltglied 19' ist dabei mit Ausgang 56 des Gleichrichters 50 verbunden. Steuereingang 41 des elektronischen Schalters 44 ist mit Stellsignal-Ausgang 34 eines elektronischen Reglers 35 verbunden, dessen Eingänge 32, 33 mit Anschlußkontakten 9, 10 einer Hilfs-Sekundär-Wicklung 45 des Transformators 11' verbunden sind; der steuerbare Schalter 44 erzeugt eine Impulsfolge mit sich änderndem Tastverhältnis, wobei die Impulsfolge-Frequenz im Bereich von 20 MHz bis 40 MHz liegt und das Tastverhältnis von einem Vergleich des an den Eingangsklemme 32, 33 aufgenommenen Meßsignals mit einem vorgegebenen Wert abhängig ist. Die Stromversorgung des elektronischen Reglers 35 erfolgt über Eingangsanschlüsse 36, 37, die mit Ausgängen 53, 54 des Gleichrichters 50 verbunden sind. Schaltglied 19' enthält einen eigenen Gleichrichter 62, dessen Ausgänge 65, 66 mit der Erreger-Wicklung 22' verbunden sind, während Eingänge 63, 64 des Gleichrichters 62 über Anschlußkontakte 20', 21'' mit Anschlußpunkten 26', 38 zur Versorgung aus der WechselspannungsNetz 5 verbunden sind. Dies bedeutet, daß je nach Höhe der anliegenden Spannung entweder genügend Energie für Erregerwicklung 22' und die magnetische Kraftwirkung auf Anker 28' bereitsteht, um die Schaltzunge 23' mit Schaltkontakt 24' zu verbinden, oder bei zu geringer Spannung die Schaltzunge 23' in ihrer Ruheposition an Relaiskontakt 25' verbleibt, so daß ein erhöhtes Übertragungsverhältnis von Primär- zu Sekundär-Wicklung erzielt wird; als Übertragungsverhältnis hat sich für die Position in Schaltkontakt 24' ein Quotient von 6,5:1 bis 7,8:1 vorzugsweise von 6,9:1 für die Position in Schaltkontakt 25' ein Quotient von 3,1:1 bis 4,5:1, vorzugsweise von 3,5:1 erwiesen.

Die Schaltungsanordnung gemäß Figur 2 arbeitet nach dem Prinzip eines Regelkreises mit Störgrößenaufschaltung, wobei die Wirkungskette des Regelkreises von Regler 35 und Transformator 11' als Regelstrecke gebildet wird, während die Störgrößenaufschaltung über Wechselspannungs-Netz 5, Gleichrichter 62 und Erreger-Wicklung 22' sowie Ansteuerung der Schaltzunge 23' erfolgt. Zwischen den Anschlußpunkten 26, 38 und den Eingangsanschlüssen 3, 4 der Stromversorgungsschaltung 1, ist das zur Blockierung netzseitiger Störungen eingesetzte Netzfilter 57 vorgesehen, dessen erster Eingang 58 über Sicherung 30 mit Eingang 3 der Stromversorgungsschaltung 1 verbunden und dessen zweiter Eingang 59 mit Eingang 4 der Stromversorgungsschaltung 1 verbunden ist; die Ausgänge 60, 61 des Netzfilters sind mit den Knotenpunkten 26' und 38 verbunden, an die die Eingänge der Gleichrichter 50, 62 angeschlossen sind.

Zur Inbetriebnahme wird Schalter 2 geschlossen, so daß die Verzweigungspunkte 26' und 38 über Netzfilter 57 jeweils mit den Eingangsklemmen 2, 3 und der Wechselspannungs-Versorgung 5 verbunden sind. Netzfilter 57 sorgt für die Unterdrückung hochfrequenter Störsignale. Über die Verzweigungspunkte 26', 38 wird Gleichrichter 50 mittels Anschluß-Klemmen 51, 52 mit Energie versorgt; über dessen Ausgänge 53, 54 wird Regler 35 durch seine Eingänge 36, 37 mit elektrischer Energie versorgt; gleichzeitig wird Solenoid 22' über Gleichrichter 62 und über Eingangsanschlüsse 20', 21' des Schaltgliedes 19' sowie über Netzfilter 57 mit der Wechselspannungsquelle 5 verbunden, wobei die von dem durch Solenoid 22' fließenden Strom ausgeübte magnetische Kraft auf Relais-Anker 28' und Schaltzunge 23' einwirkt, so daß diese je nach anliegender Spannung mit Relaiskontakt 25' oder Relaiskontakt 24' verbunden wird. Sofern die Schaltung bei einem verhältnismäßig niedrigen Spannungswert von beispielsweise 115 Volt verbleibt, reicht die magnetische Kraft nicht aus, Relaiszunge 23' aus ihrer Ruheposition mit Relaiskontakt 25' herauszubringen, so daß Ausgang 56 des Gleichrichters 50 über Anschluß 48' und 18' des Schaltgliedes 19' mit Zwischenabgriff 16' der Teilwicklung 12' verbunden wird, wobei der Endabgriff 14' dieser Teilwicklung direkt mit Ausgang 43 des steuerbaren Schalters 44 verbunden ist. Gleichzeitig ist die Hilfs-Sekundär-Wicklung 45 über Eingang 32, 33 an den Eingang des elektronischen Reges 35 angeschlossen, wobei die Spannung der Hilfs-Sekundär-Wicklung mit einem vorgegebenen Sollwert verglichen wird; bei Regelabweichung wird mittels Stellsignal des Reglers über dessen Ausgang 34 durch Ansteuerung des elektronischen Schalters 44 so lange das Tastverhältnis verändert, bis die Regelabweichung wieder ausgeglichen ist.

Es ist somit sichergestellt, daß je nach anliegender Spannung am Eingang 3, 4 die an Sekundär-Wicklung 13 über Anschluß 6, 7 angeschlossene Lampe 8 stets mit einer Spannung von ca. 24 Volt versorgt wird. Die an den Ausgängen 55, 56 des Gleichrichters 50 anliegende Spannung wird durch die Betätigung des steuerbaren Schalters 44 mittels Regler 35 soweit ausgeglichen, daß bei variierender Eingangsspannung am Eingang 3, 4 stets eine konstante Ausgangsspannung an den Klemmen 6, 7 der Sekundär-Wicklung 13 des Transformators 11' anliegt.

## Patentansprüche

1. Elektrische Versorgungs-Schaltung für wenigstens eine Lampe, insbesondere für eine Leuchte für medizinische Anwendungen, die an Wechselspannungsnetzen unterschiedlicher Versorgungsspannungen betrieben werden kann, wobei die Versorgungs-Schaltung wenigstens ein steuerbares Schaltglied aufweist, dadurch gekennzeichnet, daß die Lampe (8) an eine Sekundär-Wicklung (13, 13') eines Transformators (11, 11') angeschlossen ist, dessen Primär-Wicklung (12, 12') wenigstens drei Anschlüsse (14, 15, 16, 14', 15', 16') aufweist, von denen ein erster Anschluß (14, 14') an einen ersten Pol eines Stromkreises mit sich zeitlich ändernder Amplitude angeschlossen ist und wenigstens zwei weitere Anschlüsse mit Abgriffen (15, 16, 15', 16') zur Einstellung des Übersetzungsverhältnisses zwischen Primär- und Sekundär-Wicklung mittels Schaltglied (19, 19') versehen sind, wobei das Schaltglied ein Umsteuerelement in Form einer Schaltzunge (23, 23') aufweist, die mit dem zweiten Pol des Stromkreises sich zeitlich ändernder Amplitude verbunden ist und die Position der Schaltzunge von der Versorgungsspannung abhängig ist.

2. Versorgungs-Schaltung nach Anspruch 1, dadurch gekennzeichnet, daß das Schaltglied (19, 19') als Relais ausgebildet ist, dessen Erregerwicklung (22; 22') mit den Polen des Wechselspannungsnetzes (5) verbunden ist.

3. Versorgungs-Schaltung nach Anspruch 2, dadurch gekennzeichnet, daß die Erregerwicklung (22') über einen Gleichrichter (62) mit dem Wechselspannungsnetz (5) verbunden ist.

4. Versorgungs-Schaltung nach Anspruch 2 oder 3, dadurch gekennzeichnet, daß die Primär-Wicklung (12; 12') des Transformators (11; 11') zwei Endabgriffe (14, 15; 14', 15') und einen Zwischenabgriff (16; 16') aufweist, von denen der Zwischenabgriff (16; 16') und ein Endabgriff (15; 15') mit Anschlüssen (18, 17; 18'; 17') des Schaltgliedes (19; 19') verbunden sind.

5. Versorgungs-Schaltung nach Anspruch 4, dadurch gekennzeichnet, daß bei Überschreiten einer vorgegebenen Spannung an Erregerwicklung (22; 22') Schaltzunge (23; 23') aus ihrer Ruheposition an Relaiskontakt (25; 25') in ihre Arbeitsposition an Relaiskontakt (24; 24') umschaltbar ist.

6. Versorgungs-Schaltung nach einem der Ansprüche 1 bis 5, dadurch gekennzeichnet, daß das Übersetzungsverhältnis von Primärwicklung (11, 11') zu Sekundarwicklung (12) zwischen zwei Bereichen U1 und U2 umschaltbar ist, von denen der erste Bereich U1 ein Übersetzungsverhältnis von 3,1 : 1 bis 5,4 : 1 und der zweite Bereich U2 ein Übersetzungsverhältnis von 6,5 : 1 bis 10,5 : 1 aufweist.

7. Versorgungs-Schaltung nach Anspruch 6, dadurch gekennzeichnet, daß das erste Übersetzungsverhältnis U1 bei 4,8 : 1 und das zweite Übersetzungsverhältnis U2 bei 9,6 : 1 liegt.

8. Versorgungs-Schaltung nach einem der Ansprüche 1 bis 7, dadurch gekennzeichnet, daß im Stromkreis der Primär-Wicklung (11) des Transformators (10) ein Einschaltstrombegrenzungsglied (27) vorgesehen ist.

9. Versorgungs-Schaltung nach Anspruch 8, dadurch gekennzeichnet, daß als Einschaltstrombegrenzungsglied (27) ein NTC-Widerstand eingesetzt ist.

10. Versorgungs-Schaltung nach einem der Ansprüche 1 bis 7, dadurch gekennzeichnet, daß im Stromkreis der Primärwicklung ein elektronischer Schalter (44) vorgesehen ist, dessen Schaltstrecke (42, 43) in Reihe zum Schaltglied (19, 19') geschaltet ist, wobei der Stromkreis der Primärwicklung über Ausgänge (55, 56) eines Gleichrichters (50) gespeist wird.

11. Versorgungsschaltung nach Anspruch 10, dadurch gekennzeichnet, daß der elektronische Schalter (44) einen Eingang (41) aufweist, der mit dem Stellsignal-Ausgang (34) eines elektronischen Reglers (35) verbunden ist, dessen Eingang (32, 33) über Meß-Anschlüsse (9, 10) mit einer zusätzlichen Sekundärwicklung (45) des Transformators (11') verbunden ist.
